(19) Europäisches Patentamt
European Patent Office
Office européen des brevets

(11) **EP 1 645 194 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.06.2016  Patentblatt 2016/26**

(45) Hinweis auf die Patenterteilung:
**15.07.2009  Patentblatt 2009/29**

(21) Anmeldenummer: **05019835.7**

(22) Anmeldetag: **13.09.2005**

(51) Int Cl.:
*A23G 3/02* *(2006.01)*     *A23G 3/00* *(2006.01)*
*A23G 7/00* *(2006.01)*

(54) **Verfahren und Vorrichtung zur gleichzeitigen Herstellung von Süsswaren in mehreren Produktsorten**

Process and apparatus for the parallel manufacture of several types of confectionery

Procédé et dispositif pour la production parallèle de plusieurs sortes de confiseries

(84) Benannte Vertragsstaaten:
**AT DE FR GB IT NL**

(30) Priorität: **09.10.2004  DE 102004049269**

(43) Veröffentlichungstag der Anmeldung:
**12.04.2006  Patentblatt 2006/15**

(73) Patentinhaber: **CHOCOTECH GmbH**
**38855 Wernigerode (DE)**

(72) Erfinder: **Markwardt, Klaus**
**30880 Laatzen (DE)**

(74) Vertreter: **REHBERG HÜPPE + PARTNER**
**Patentanwälte PartG mbB**
**Robert-Gernhardt-Platz 1**
**37073 Göttingen (DE)**

(56) Entgegenhaltungen:
EP-A- 0 648 427     WO-A-99/65321
WO-A-2004/103085     DE-A1- 2 142 158
DE-A1- 10 218 167     DE-C1- 10 217 984
US-A- 5 481 968

- KOPIE ZEITUNGSBERICHT üBER DIE INTERPACK 2002 "NEUES FüR DIE SüSSWARENINDUSTRIE"07.2002
- INFORMATIONSBLATT VON KLöCKNER HäNSEL PROCESSING "JELLYBLEND METERING DEVICES" 2002
- EIDESSTATTLICHE VERSICHERUNG VON HERRN GERNOT MüLLER, 24.02.2010
- ANGEBOT EFRUTI 13.08.2001
- DOKUMENTATION DER ANLAGE JELLYBLEND AN EFRUTI. 28.05.2002
- ZEICHNUNG IN DER D4 ERHALTEN
- BESCHLUSS DES DPMA, 12.09.2007

EP 1 645 194 B2

**Beschreibung**

Die Erfindung betrifft ein Verfahren und eine Vorrichtung mit den in den Oberbegriffen der unabhängigen Ansprüche angegebenen Merkmalen. Dabei geht es um die gleichzeitige parallele Herstellung mehrerer gleichartiger Produktsorten in mehreren Produktlinien, die unter Verwendung einer gemeinsamen Basismasse kontinuierlich odertaktweise hergestellt werden. Als Produkte werden beispielsweise Gießprodukte, insbesondere Geleeprodukte (Mogulware) hergestellt. Die Produktsorten werden insbesondere als Mischung verpackt und verkauft. Es kann sich um Produkte gleicher Gestalt, beispielsweise um Gummibärchen, handeln, bei denen innerhalb einer Packung gleiche Anteile von Produktsorten vorhanden sind, die sich beispielsweise nur durch unterschiedliche Farben unterscheiden. Aber auch Produkte unterschiedlicher Gestalt und/oder Geschmacksrichtung können gleichzeitig parallel hergestellt und in einer Sammelpackung in den Verkehr gelangen. Die Erfindung ist auch bei der Herstellung von Süßwaren anwendbar, die Gelatine, Fondant oder ähnliche Stoffe enthalten. Die Süßwaren können auch puderlos in feste Formen gegossen werden.

## STAND DER TECHNIK

Ein Verfahren und eine Vorrichtung zur gleichzeitigen Herstellung von Süßwaren in mehreren Produktsorten ist bekannt. z.B. Stand der Technik Dokumente WO 9 965 321, EP 0 648 427, WO 2004 103 085, US 5 481 968.

Es ist eine Vorrichtung zum Steuern einer Anlage zur gleichzeitigen Herstellung von Süßwaren in mehreren Produktsorten bekannt. Die Vorrichtung weist einen Basisbehälter für eine allen Produktmassen gemeinsame Basismasse auf. Die Herstellung der Basismasse geschieht mit einer bekannten Rohstoffverwiegung mit einem Wiegebehälter, in den die Rohstoffe rezeptkonform eingewogen werden. Die Rohstoffverwiegung arbeitet satzweise, wobei zunächst jeweils ein Satz in einen Vorlagebehälter überführt wird. Über eine Pumpe wird die Masse kontinuierlich abgezogen, durch einen Kocher und einen Vakuumraum geführt, so dass sie schließlich als Basismasse in einen Basisbehälter überführt wird. Bei dieser Basismasse handelt es sich um eine Grundmasse, die in der Regel den wesentlichen Anteil an Produktmasse darstellt und für alle Produktsorten zum Einsatz gelangt. Die einzelnen Produktmassen werden aus einem Anteil Basismasse und den produktspezifischen Zuschlagsstoffen hergestellt. Dies geschieht satzweise in je einem Produktbehälter, der auch als Misch- und Wiegebehälter bezeichnet werden kann. Für die Überführung der Basismasse in je einen Produktbehälter ist eine entsprechende Leitung mit Ventil vorgesehen. Ähnlich werden die Zuschlagsstoffe in den jeweiligen Produktbehälter eingebracht. Dies geschieht z. B. mit Zuschlagsbehältern für Zuschlagsstoffe, wie Aromen, Farben und dergleichen. Die rezeptgetreue Abwiegung der Zuschlagsstoffe erfolgt mit Hilfe von Wiegebehältern für die Zuschlagsstoffe, die dem jeweiligen Produktbehältervorgeschaltet sind. Jedem Produktbehälter ist je ein Vorratsbehälter nachgeschaltet, aus dem heraus die jeweilige Vorratsmasse weiterverarbeitet wird. Dies geschieht beispielsweise an einer Gießmaschine, wobei jeder Vorratsbehälter die zu verarbeitende jeweilige Vorratsmasse aufnimmt und taktweise kontinuierlich vergießt. Dabei sinkt die Menge der Vorratsmasse im Vorratsbehälter ab, bis ein vorgesehenes oder einstellbares Minimum erreicht ist. Es erfolgt eine Nachspeisung mit einem neuen Satz Produktmasse in den Vorratsbehälter, wobei die Volumina des Produktbehälters und des Vorratsbehälters entsprechend abgestimmt und konstruktiv festgelegt sein müssen, damit die Überführung der Massen jeweils möglich ist. Die Überführung der Massen aus einem Behälter in einen nachgeschalteten Behälter geschieht durch Schwerkrafteinfluss und durch das Öffnen von Ventilen in entsprechenden Leitungen. Durch die jeweilige Abwiegung im Produktbehälter ist eine gewichtsgenaue Einhaltung der jeweiligen Rezeptur möglich. Die bekannte Anlage arbeitet sicher und lässt sich auch auf andere Produkte leicht umstellen. Die Anlage passt sich automatisch dem Verbrauch an.

Beim Betrieb solcher Anlagen ergeben sich während der kontinuierlichen Produktion meist keine Schwierigkeiten. Die einzelnen Produktmassen werden rezeptgetreu angemischt. Die Vorratsbehälter werden satzweise mit Produktmasse nachgefüllt, so dass damit eine Anpassung an den Durchsatz erreicht wird. Während dieser Produktion verschieben sich die Nachspeisungen der einzelnen Produktmassen zeitlich gegeneinander. Dies kann seine Ursache darin haben, dass der Verbrauch an Vorratsmasse in den einzelnen Gießstationen einer Gießmaschine geringfügig unterschiedlich ist und/oder die Massen geringfügig unterschiedliche Eigenschaften aufweisen. Es ist eine Niveauüberwachung in den einzelnen Vorratsbehältern der Gießstationen vorgesehen. Durch diese Niveauüberwachung wird die betreffende Nachspeisung des jeweiligen Vorratsbehälters mit Produktmasse ausgelöst.

Gegen Ende einer gleichzeitigen Herstellung mehrerer Produktsorten sind die Produktbehälter und die Vorratsbehälter unterschiedlich gefüllt. Ein Teil der Produktbehälter enthält je einen mengenmäßig gleichen Satz an Produktmasse. Ein oder mehrere andere Produktbehälter sind gerade leer. In einem oder mehreren wieder anderer Produktbehälter wird gerade ein neuer Satz Produktmasse angemischt. Ähnliche Zustände ergeben sich auch bei einer Produktionsunterbrechung oder Rezeptumstellung. Es muss dann entschieden werden, beispielsweise die noch vorhandene Basismasse aufzubrauchen und keine neue Basismasse herzustellen. Dies wird dazu führen, dass die Produktbehälter in der Folge befüllt und dann nicht mehr befüllt werden, wodurch unterschiedliche Mengen in die einzelnen Vorratsbehälter gelangen, aus denen die Weiterverarbeitung heraus stattfindet. Dies wird letztlich dazu führen, dass einzelne Produktsorten noch hergestellt werden, während andere Produktsorten nicht mehr hergestellt werden. Wenn diese Produktsorten dann so, wie sie hergestellt werden, verpackt werden, ändert sich das Mischungsverhältnis der Produktsorten in den einzelnen Verpackungsbeuteln, was unerwünscht ist. Es besteht die Möglichkeit, die Herstellung zu beenden, sobald der erste Vorratsbehälter entleert ist und dort eine Nachspeisung nicht mehr stattfindet. Dann wird zwar das Mischungsverhältnis der Produktsorten eingehalten, es entstehen in Produktbehältern und in Vorratsbehältern jedoch Verlustmassen, die entsorgt werden müssen. Die dadurch eintretenden Verluste gilt es zu vermeiden. Andererseits kann man natürlich die restliche Herstellung auch fortsetzen, bis sämtliche Vorratsmassen verarbeitet sind. Dabei ändert sich dann das Mischungsverhältnis, welches es in Kauf zu nehmen gilt. Wenn also Schwankungen im Mischungsverhältnis nicht akzeptiert werden können, entsteht notwendigerweise Abfall bzw. Verlustmasse. Das geschilderte Problem tritt immer dann auf, wenn Produktmasse satzweise angemischt wird. Dies kann nach Gewichtsanteilen oder auch nach Volumenanteilen geschehen. Ein ungleichmäßiger Verbrauch an Produkt-bzw. Vorratsmasse, der sich zwangsläufig über längere Produktionszeiten einstellt, ist nicht vermeidbar.

Es ist auch eine Gießanlage für Süßwaren bekannt, bei der nach der Herstellung der Basismasse eine volumetrische Unterteilung der Basismasse In Produktmasse erfolgt. Die Zuschlagsstoffe werden ebenfalls volumetrisch mit Hilfe von Standgläsern abgeteilt. Die Teilmengen werden durch Öffnen von Ventilen in entsprechenden Verbindungsleitungen unter Schwerkrafteinfluss zusammengeführt und gemischt. In den Produktbehältern befinden sich Füllstandssonden, die das Erstellen eines neuen Satzes an Produktmasse veranlassen. Auch hierbei ergeben sich die eingangs beschriebenen Probleme.

Weiterhin ist eine Misch- und Dosieranlage für Gummi- und Gelee-Süßweren bekannt, bei der die einzelnen Behälter über Leitungen verbunden sind, in denen Pumpen angeordnet sind. Die Beschickung jedes Gießkopfes bzw. jedes Vorratsbehälters an einer Gießmaschine erfolgt kontinuierlich mit Basismasse und den Zuschlagsstoffen. Die Anzahl der erforderlichen Pumpen in den Leitungen ist erheblich. Die Pumpenwartung ist aufwendig und die Funktion unsicher. Allerdings ist hier die Umstellung auf ein anderes Produkt oder die Beendigung einer Produktion problemlos, da die Förderung in allen Pumpen gleichzeitig unterbrochen werden kann. Insoweit stellt sich hier das eingangs beschriebene Problem nicht.

## AUFGABE DER ERFINDUNG

Der Erfindung liegt die Aufgabe zugrunde, ein Verfahren und eine Vorrichtung der eingangs beschriebenen Art so weiterzubilden, dass bei paralleler Herstellung mehrerer Produktsorten am Produktionsende einerseits sowie bei Artikelumstellung oder Rezeptänderung konstante Mischungsverhältnisse der Produkte eingehalten werden können, ohne dass nennenswerter Abfall entsteht.

## LÖSUNG

Die Aufgabe der Erfindung wird erfindungsgemäß mit den Merkmalen der unabhängigen Patentansprüche gelöst.

## BESCHREIBUNG DER ERFINDUNG

Bei dem erfindungsgemäßen Verfahren wird in jeder Produktlinle die Menge an Vorratsmasse in jedem Vorratsbehälter während der Weiterverarbeitung überwacht. Die Überwachung kann durch Erfassung eines oder mehrerer Füllstände erreicht werden. Während der normalen Produktion wird, sobald ein festgelegtes Minimum der Menge an Vorratsmasse in dem Vorratsbehälter vorhanden ist, eine Nachspeisung des Vorratsbehälters mit einem Satz Produktmasse aus dem jeweiligen Produktbehälter veranlasst. Dabei wird die Satzgröße insbesondere konstant gehalten. Diese ist konstruktiv auf die jeweilige Anlage abgestimmt. Bei dem neuen Verfahren werden nachfolgend an ein eingeleitetes Produktionsende und/oder einen Produktwechsel die nachfolgenden Satzgrößen und Satzzeiten der Produktmassen so verändert, dass sich zu einem nachfolgenden Zeitpunkt die Mengen an Vorratsmassen In allen Produktlinien gleichzeitig erschöpfen. Es werden nachfolgend an ein eingeleitetes Produktionsende und/ oder einen Produktwechsel die nachfolgenden Satzgrößen und Satzzeiten der anderen Produktmassen relativ zu einer konstanten Produktmasse mit konstanter Satzzeit so verändert, dass sich zu einem nachfolgenden Zeitpunkt die Mengen an Vorratsmassen in allen Produktlinien gleichzeitig erschöpfen. Dies geschieht durch Satzverfeinerung oder durch Satzvergrößerung der Restsätze In den anderen Produktlinien relativ zu einer Produktlinie. Bei Anpassung durch Satzverkleinerung wird zunächst eine erste Produktmasse ausgewählt, nach der die Anlage gesteuert wird. Bei dem neuen Verfahren wird bei Anpassung durch Satzvergrößerung eine letzte Produktmasse ausgewählt, nach der die Anlage gesteuert wird Jede der verschiedenen Produktmassen kann die erste bzw. letzte Produktmasse darstellen bzw. abgeben. Die konstruktiv vorgesehene normale Satzgröße wird bei dieser ersten bzw. letzten Produktmasse unverändert weiter angemischt und verarbeitet. Die Satzgrößen der anderen Produktmassen werden relativ zu der ersten bzw. letzten Produktmasse so verändert, dass sich zu einem nachfolgenden Zeitpunkt die Vorratsmengen bei allen Produktmassen in jedem Vorratsbehälter gleichzeitig erschöpfen, so dass mit dem Abarbeiten der Vorratsmassen in den einzelnen Vorratsbehältern ein definitives Produktionsende abfallfrei erreicht wird. Der Zeitpunkt der Einleitung eines Produktionsendes oder der Umstellung auf ein anderes Rezept kann entweder beliebig gewählt werden oder aber auch von anderen Ereignissen in der Produktion abhängig gemacht werden. So kann man beispielsweise die Herstellung der Basismasse einstellen und hiervon abhängig die erste oder letzte Produktmasse wählen. Die Veränderung der Satzgrößen geschieht bevorzugt durch Wahl kleinerer Satzgrößen der anderen nachfolgenden Produktmassen. Es ist aber auch nicht ausgeschlossen, die Satzgrößen der anderen Produktmassen auch zu vergrößern, sofern dies konstruktiv in der Größe der Behälter berücksichtlgt worden ist.

Insbesondere ist es möglich, die Zeltdifferenzen zwischen den satzweisen Nachspeisungen der Vorratsmassen in den einzelnen Produktlinien mit der jeweiligen unterschiedlichen und mengenmäßig gleichen Produktmasse festzustellen und in Abhängigkeit davon die Satzgrößen und Satzzeiten nachfolgender Produktmassen der Produktlinien so zu verändern, dass die Zeitdifferenzen der Nachspeisungen zu einem für alle Produktlinien gemeinsamen in der Zukunft liegenden Zeitpunkt verschwinden. Dies wird dann dazu führen, dass zunehmend relativ zeitnah beieinander sämtliche Vorratsbehälter nachgespeist werden. Dies geschieht mit unterschiedlichen Satzgrößen so, dass die Vorratsbehälter in gleicher Weise befüllt werden. Daran schließt sich das Abarbeiten der Vorratsmasse aus diesen Vorratsbehältern an. Mit der letzten satzweisen Nachspeisung wird auch das Anmischen neuer Masse in den Produktbehältern eingestellt. Mit dem Abarbeiten der unterschiedlichen Vorratsmengen In den Vorratsbehältern wird abfalllos ein definitives gemeinsames Produktionsende erreicht.

Die erste Produktmasse wird mit konstanter Satzgröße weiter erzeugt, also die Satzgröße gegenüber der normalen Produktion nicht verändet. Es werden dann die anderen Produktmassen mit verringerten Satzgrößen angemischt, wobei darauf zu achten Ist, dass immer hinreichend große Masseportionen angemischt werden, so dass durch die Satzgröße beeinflusste Eigenschaftsänderungen vermieden werden. Die verringerte Satzgröße jeder Produktmasse wird proportional zu der Zeitdifferenz zwischen der Nachspeisung der betreffenden Vorratsmasse mit der betreffenden Produktmasse zu der Nachspeisung der Vorratsmasse mit der ersten Produktmasse gewählt.

Bei entsprechender Bemessung der Vorratsbehälter und Abstimmung aufeinander ist es durchaus möglich, das Produktionsende sehr schnell zu erreichen und nur jeweils eine geänderte Satzgröße an jeder Produktmasse einzusetzen. Sinnvoller ist es jedoch, wenn die Änderung der Satzgröße der anderen Produktmassen jeweils auf mehrere nacheinander folgende Zyklen mit Insbesondere untereinander gleich großen Satzgrößen aufgeteilt wird. Dadurch wird erreicht, dass hinsichtlich der unterschiedlichen angepassten Satzgrößen nur eine relativ geringe Schwankung auftritt, so dass die dabei entstehenden Massen und Produkte die gleichen Eigenschaften aufweisen wie während der normalen Produktion.

Die Verringerung der Satzgrößen der anderen Produktmassen erfolgt vorzugsweise nach der Formel

$$mn = ms - (tn/(ts \cdot c)) \cdot ms$$

wobei

| | |
|---|---|
| ms (kg) = | die konstruktiv festgelegte Satzgröße aller Produktmassen, |
| mn (kg) = | die verringerten Satzgrößen der Produktionslinien, |
| n = | die Produktionslinien (n = 1, 2, 3, 4 usw.), |
| tn = | die Zeitdifferenz der Nachspeisungen der Produktmassen, |
| te = 0 = | der Zeitpunkt der Nachspeisung der ersten Produktmasse, (slehe Fig. 4 : te = t3) |
| ts (min) = | die Satzzeit der konstruktiv festgelegten Satzgröße, |
| c = | Anzahl der Abfahr-Zyklen bis Produktionsende |

ist. Dabei ändern sich auch die Satzzeiten der Verarbeitung der verringerten Satzgrößen der Produktionslinien nach der Formel

$$tsn = ts \cdot mn/ms$$

wobei

| | |
|---|---|
| tsn = | die verringerte Satzzeit der jeweiligen Produktionslinie ist. |

Dfe Produktionslinie, deren Nachspeisesignal zuerst kommt, wird Führungs- oder Masterlinie und daher mit unveränderter Satzgröße betrieben. Entsprechendes gilt für eine Anpassung durch Satzvergrößerung, also

$$mn = ms + ((tl-tn)/(ts \cdot c)) \cdot ms$$

erfolgt, wobei

| | |
|---|---|
| ms (kg) = | die konstruktiv festgelegte Satzgröße aller Produktmassen, |
| mn (kg) = | die vergrößerten Satzgrößen der Produktionslinien, |
| n = | die Produktionslinien (n = 1, 2, 3, 4 usw.), |
| tn = | die Zeitdifferenz der Nachspeisungen der Produktmassen, |
| tl = | die Zeitdifferenz der Nachspeisungen zwischen der letzten und der ersten Produktmasse, (siehe Fig. 5 : tl = t1) |

ts (min) = die Satzzeit der konstruktiv festgelegten Satzgröße,

c = Anzahl derAbfahr-Zyklen bis Produktionsende.

Die Produktionslinie, deren Nachspeisesignal zuletzt kommt, wird Führungs- oder Masterlinie und daher mit unveränderter Satzgröße betrieben.

Eine Vorrichtung zum Steuern einer Anlage zur gleichzeitigen Herstellung von Süßwaren in mehreren Produktsorten, die zur Durchführung des Verfahrens in besonderer Weise geeignet ist, kennzeichnet sich dadurch, dass eine gemeinsame Steuereinrichtung für die den Behältern zugeordneten Ventile und Wiegezellen vorgesehen ist, dass jeder Vorratsbehälter in jeder Produktlinie einen Sensor zur Abgabe eines der Veränderung der Menge jeder Vorratsmasse proportionalen Signals an die gemeinsame Steuereinrichtung aufweist, und dass die Steuereinrichtung eine Recheneinheit zur Aufnahme der Signale der Sensoren, zur Berechnung veränderter Satzgrößen und Satzzeiten der anderen Produktmassen relativ zu einer ersten Produktmasse und zur Ansteuerung der Ventile und Wiegezellen des Basisbehälters, der Produktbehälter und der Zuschlagsbehälter aufweist. Während im Stand der Technik jeder Vorratsbehälter lediglich mit einer Füllstandssonde ausgestattet war, die die satzweise Nachspeisung aus dem zugehörigen Produktbehälter in der betreffenden Produktlinie veranlasst, sind die verschiedenen Produktlinien nunmehr durch eine gemeinsame Steuereinrichtung verbunden. Die gemeinsame Steuereinrichtung steuert die Ventile in den einzelnen Leitungen und die Wiegezellen der Behälter, womit die Satzgrößen festgelegt werden. Jeder Vorratsbehälter besitzt einen Sensor zur Abgabe eines der Veränderung der Menge an Vorratsmasse proportionalen Signals an die gemeinsame Steuereinrichtung. Die Signale werden damit an der Steuereinrichtung zusammengefasst. Eine Recheneinheit in der Steuereinrichtung dient der Aufnahme und Abspeicherung der Signale der Sensoren und zur Berechnung veränderterSatzgrößen der anderen Produktmassen relativ zu einer ersten Produktmasse zur Herbeiführung eines Produktionsendes oder eines Produktwechsels. Die Steuereinheit steuert auch die Ventile und Wiegezellen derverschiedenen Behälteran, um die veränderten Satzgrößen zu realisieren. Die Überführung der Massen erfolgt durch Schwerkrafteinwirkung, so dass die mit Pumpen verbundenen Nachteile vermieden werden.

## KURZBESCHREIBUNG DER FIGUREN

Im Folgenden wird die Erfindung anhand in den Figuren dargestellter bevorzugter Ausführungsbeispiele weiter erläutert und beschrieben.

**Fig. 1** zeigt ein Fließbild einer Anlage zur Herstellung mehrerer Produktsorten parallel nebeneinander.

**Fig. 2** zeigt den Verlauf der Befüllung je eines Produktbehälters mit einem nachgeschalteten Vorratsbehälter in zwei parallelen Linien.

**Fig. 3** zeigt Diagramme des zeitlichen Verlaufs der beiden Produktlinien gemäß Fig. 2.

**Fig. 4** zeigt ein Zeitdiagramm der Produktionsbehälter von 6 Produktionslinien mit Anpassung der Satzgrößen und Satzzeiten durch Satzverkleinerung.

**Fig. 5** zeigt ein Zeitdiagramm der Produktionsbehälter von 3 Produktionslinien mit Anpassung der Satzgrößen und Satzzeiten durch Satzvergrößerung.

## FIGURENBESCHREIBUNG

Es sei zunächst vorausgeschickt, dass die Bezeichnung der Behälter und die Bezeichnung der darin befindlichen Massen durch eine gemeinsame Vorsilbe aufeinander abgestimmt sind. Im Basisbehälter befindet sich also Basismasse, im Produktbehälter Produktmasse usw..

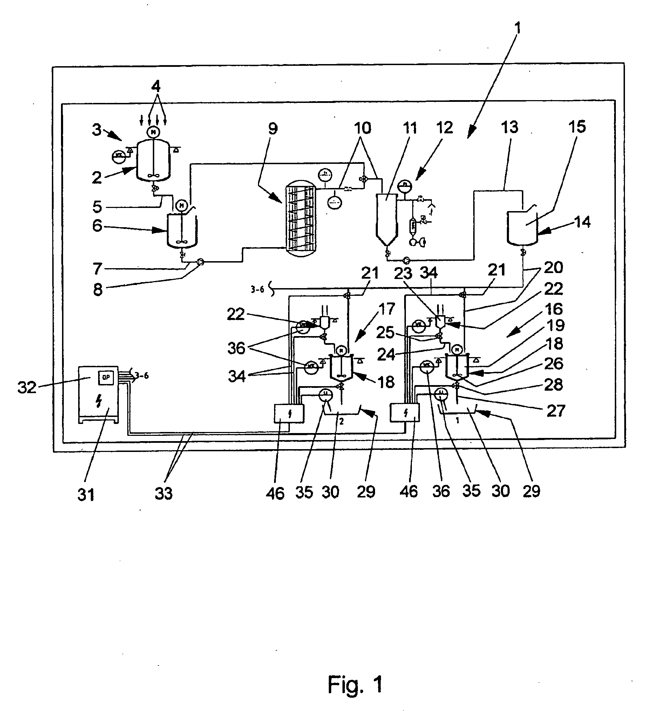

Fig. 1 zeigt in schematischer Weise eine Anlage 1, wie sie beispielsweise für die Herstellung mehrere Produktsorten von Süßwaren in mehreren zueinander parallelen Produktlinien geeignet ist. Es ist ein Wiegebehälter2 einer Rohstoffverwiegung 3 vorgesehen. Die einzelnen Rohstoffe, diefürdie Erstellung einer Basismasse 15 benötigt werden, gelangen gemäß den Pfeilen 4 rezeptgetreu für die Basismasse 15 in den Wiegebehälter 2 und werden dort gemischt. Das Mischen der Rohstoffe geschieht satzweise. Von dem Wiegebehälter 2 führt eine Leitung 5, in der ein Ventil angeordnet ist, zu einem Vorlagebehälter 6. Die Überführung der Vorlagemasse aus dem Wiegebehälter 2 in den Vorlagebehälter 6 geschieht satzweise. Auch der Vorlagebehälter 6 ist mit einem Rührwerk versehen, um die homogene Vermischung der Vorlagemasse aufrechtzuerhalten bzw. herbeizuführen. Von dem Vorlagebehälter 6 führt eine Leitung 7, in der eine Pumpe 8 angeordnet ist, zu einem Kocher 9. Die Pumpe 8 arbeitet kontinuierlich. Von dem Kocher 9 führt eine Leitung 10 zu einem Vakuumraum 11 eines Vakuumbehälters 12. Der Vakuumbehälter 12 ist über eine Leitung 13 mit Pumpe mit einem Basisbehälter 14 verbunden, in welchem die Basismasse 15 aufgesammelt wird. Die Basismasse 15 ist gemeinsamer und wesentlicher Bestandteil der Masse, wie sie in jeder einzelnen Produktlinie verarbeitet wird. Die bisher beschriebene Herstellung der Basismasse 15 ist nur beispielhaft zu verstehen. Sie wird in dieser oder in entsprechend abgewandelter Ausführung z. B. immer dann Anwendung finden, wenn Gießmassen hergestellt werden sollen.

Dem Basisbehälter 14 mit der Basismasse 15 sind verschiedene Produktlinien 16 und 17 usw. nachgeordnet. Es sind hier nur zwei Produktlinien 16, 17 im Einzelnen dargestellt. Jede Produktlinie ist übereinstimmend ausgebildet und angeordnet. Die Zahl der Produktlinien ist beliebig. Es sind hier bis zu sechs Produktlinien angedeutet.

Jede Produktlinie 16, 17 usw. verfügt über einen Produktbehälter 18 zur Anmischung und Bereitstellung von Produktmasse 19. Die Produktmasse 19 wird aus einem entsprechenden Anteil Basismasse 15 sowie aus Zuschlagsstoffen 23 hergestellt und bereitgehalten. Zu diesem Zweck führt vom Basisbehälter 14 eine Leitung 20, in der ein Ventil 21 vorgesehen ist, zu dem Produktbehälter 18. Parallel dazu sind Zuschlagsbehälter 22 für Zuschlagsstoffe 23, wie Farben, Aromen, usw. vorgesehen. Es ist nur jeweils ein Zuschlagsbehälter 22 in jeder Produktlinie 16, 17 usw. dargestellt. Tatsächlich verfügt jede Produktlinie 16, 17 usw. über eine entsprechende Vielzahl von Zuschlagsbehältern 22 für die einzelnen Zuschlagsstoffe. Pro Produktlinie können durchaus fünf und mehr solcher Zuschlagsbehälter 22 vorgesehen sein. Die Zuschlagsbehälter 22 sind mit Wiegezellen 36 versehen, also als Wiegebehälter ausgebildet, denen nicht dargestellte weitere Behälter für die Aufbewahrung der Zuschlagsstoffe vorgeschaltet sind. Von jedem Zuschlagsbehälter 22 führt eine Leitung 24 mit Ventil 25 zu dem Produktbehälter 18. Dies gilt jeweils für jede der Produktlinien 16, 17 usw. Damit ist erkennbar, dass die Produktmasse 19 im Produktbehälter 18 chargenweise angemischt wird, indem ein entsprechender Anteil Basismasse 15 sowie die zugehörigen Zuschlagsstoffe 23 rezeptgetreu eingebracht und mit Hilfe eines Rührwerks 26 angemischt werden. Das Anmischen erfolgt satzweise.

Von dem Produktbehälter 18 führt eine Leitung 27 mit Ventil 28 zu einem Vorratsbehälter 29, der Vorratsmasse 30 enthält. Der Vorratsbehälter 29 kann z. B. Bestandteil einer Gießanlage sein, die eine Produktsorte gießt, z. B. rote Gummibärchen. Mit der Produktlinie 17 werden beispielsweise grüne Gummibärchen gegossen.

Die einzelnen Produktlinien 16, 17 usw. sind identisch und parallel angeordnet und aufgebaut, wie dies im Einzelnen für die Produktlinie 16 beschrieben wurde.

Es ist eine gemeinsame Steuereinrichtung 31 für die gesamte Anlage 1 vorgesehen, die eine Recheneinheit 32 umfasst. Zu jeder Produktlinie 16, 17 usw. führen elektrische Leitungen 33, die sich in elektrischen Leitungen 34 verzweigen. Den einzelnen Produktlinien 16, 17 usw. können Steuerblöcke 46 zwischen den Leitungen 33 und 34 zugeordnet sein. In jedem Vorratsbehälter 29 befindet sich ein Sensor 35, der beispielsweise als einstellbare Füllstandssonde ausgebildet ist und der das Absinken der Menge der Vorratsmasse 30 in dem Vorratsbehälter 29 überwacht. Der Sensor 35 erzeugt bei Unterschreiten des eingestellten vorgesehenen minimalen Füllstandes des Vorratsbehälters 29 mit Vorratsmasse 30 ein Signal, welches über die betreffende Leitung 34, 33 an die gemeinsame Steuereinrichtung 31 abgegeben wird. Umgekehrt steuert die Steuereinrichtung 31 ein Signal zum Öffnen des betreffenden Ventils 28 der betreffenden Produktlinie aus, so dass dann ein vorher angemischter weiterer Satz Produktmasse 19 von dem betreffenden Produktbehälter 18 in den Vorratsbehälter 29 abgelassen wird, so dass dessen Spiegel der Vorratsmasse 30 ansteigt. Es versteht sich, dass die Vorratsmasse 30 aus dem Vorratsbehälter 29 kontinuierlich verarbeitet wird. Dies geschieht beispielsweise taktweise durch eine Gießanlage in entsprechende Gießformen.

Jeder Produktbehälter 18 ist mit Wiegezellen 36 ausgestattet, die das Abwiegen von Basismasse 15 im Produktbehälter ermöglichen. Das Anmischen eines weiteren nachfolgenden Satzes an Produktmasse 19 geschieht sortengetreu in dem jeweiligen Produktbehälter 18 der betreffenden Produktlinie 16, 17 usw.. Dies geschieht durch entsprechende Ansteuerung der Ventile 21 und 25 in der betreffenden Produktlinie, beispielsweise der Produktlinie 16. Auch der Basisbehälter 14 kann in die gemeinsame Ansteuerung durch die Steuereinrichtung 31 eingeschlossen sein, was hier jedoch der Einfachheit halber nicht dargestellt ist.

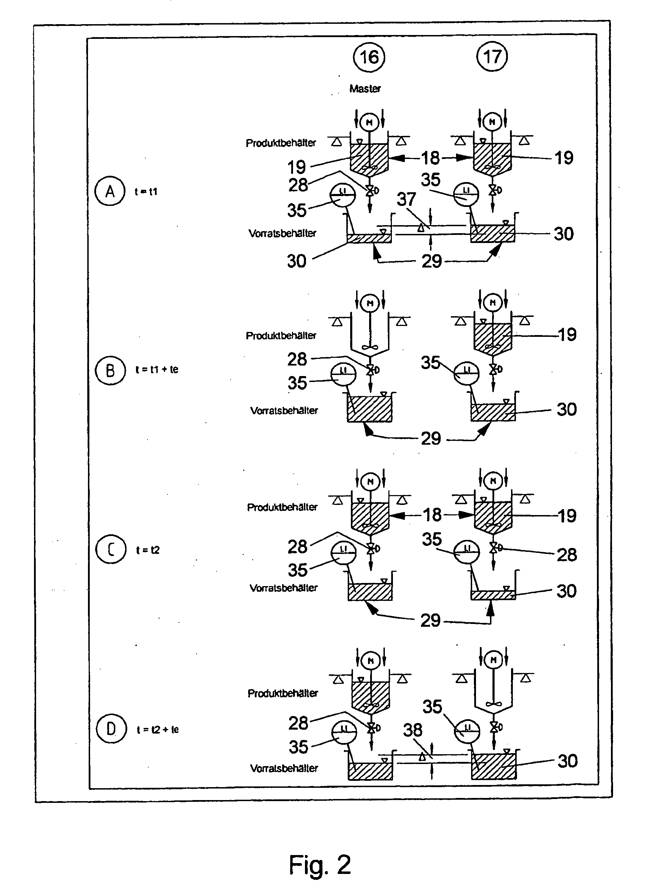

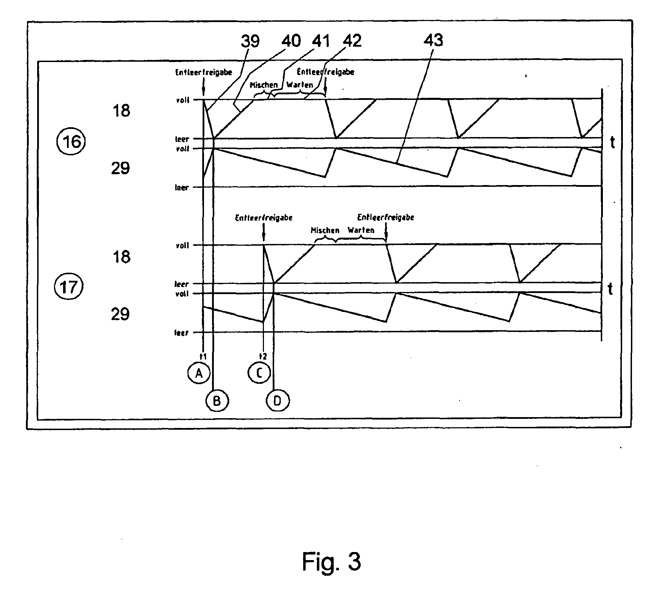

Um die Problematik zu verdeutlichen, mit der sich die vorliegende Erfindung beschäftigt, sei auf die Fig. 2 und 3 hingewiesen. In Fig. 2 ist schaubildlich in mehreren Stufen dargestellt, wie die Produktbehälter 18 und die Vorratsbehälter 29 der beiden Produktlinien 16 und 17 jeweils befüllt und entleert werden, wobei einerseits das Anmischen von Produktmasse 19 und das Nachspeisen der Vorratsmasse 30 mit einem Satz Produktmasse 19 dargestellt sind.

Zu einem Zeitpunkt t = t1, der durch den Befüllzustand A wiedergibt, ist die Vorratsmasse 30 des Vorratsbehälters 29 der Produktlinie 16 so weit abgearbeitet, dass der Flüssigkeitsspiegel der Vorratsmasse 30 den Sensor 35 freigibt, so dass das betreffende Signal für die gemeinsame Steuereinrichtung 31 erzeugt wird, welches die Überführung eines vorher angemischten Satzes an Produktmasse 19 aus dem Produktbehälter 18 der Produktlinie 16 auslöst. Die Vorratsmasse 30 im Vorratsbehälter 29 der Produktlinie 17 ist hoch nicht so weit abgearbeitet, so dass der Satz Produktmasse 19 auch weiterhin in dem dortigen Produktbehälter 18 verbleibt.

Im Befüllzustand B ist nach Ablauf der Entleerungszeit te ein Zeitpunkt erreicht, in welchem der Produktbehälter 18 der Produktlinie 16 leergelaufen ist und die Produktmasse 19 den Vorratsbehälter 29 der Produktlinie 16 aufgefüllt hat, so dass das Niveau der Vorratsmasse 30 im Vorratsbehälter 29 entsprechend angestiegen ist. Im Vorratsbehälter 29 der Produktlinie 17 ist der Spiegel der Vorratsmasse 30 zwar weiter abgesunken, ohne allerdings den dortigen Sensor 35 freizugeben. Dies geschieht erst zu dem Befüllungszustand C, also einer Zeit t = t2. Während dieser Zeit wird aus allen Produktlinien 16, 17 Vorratsmasse 30 vergossen, so dass die Spiegel in den Vorratsbehältern 29 gemeinsam absinken. In der Zeitspanne zwischen den Befüllungszuständen B und C steht hinreichend Zeit zur Verfügung, einen weiteren Satz Produktmasse 19 in dem Produktbehälter 18 anzumischen, wie dies für den Befüllungszustand C dargestellt ist. Im Befüllungszustand C erreicht das Niveau der Vorratsmasse 30 in der Produktlinie 17 das vorgesehene Minimum, wobei nunmehr eine Nachspeisung in der Produktlinie 17 erfolgt, d. h. es wird ein Satz Produktmasse 19 in den Vorratsbehälter 29 abgelassen, während gleichzeitig in der Produktlinie 16 der Spiegel zwar auch absinkt, ohne dass allerdings das Minimum an betreffender Vorratsmasse erreicht wird.

Es werden sich in den Vorratsbehälter 29 der beiden Produktlinien 16 und 17 unterschiedliche Füllstandsdifferenzen 37 und 38 einstellen. Theoretisch sind die Füllstandsdifferenzen 37 und 38 gleich 0, wenn vorausgesetzt wird, dass die Anlage in ihren verschiedenen Produktlinien 16, 17 usw. gleichzeitig betriebsbereit war und auch gestartet wurde, wobei weiter vorausgesetzt ist, dass auch der Verbrauch in den einzelnen Produktlinien 16 und 17 genau gleich sein wird. In der Praxis lässt sich diese Gleichheit nicht einhalten. Durch unterschiedliche Gießparameter, geringfügig unterschiedliche Eigenschaften der einzelnen Produktmassen 19 sowie Vorratsmassen 30, auch aufgrund geringfügig differierender Volumina der Gießportionen im entsprechenden Toleranzfeld werden sich bei Produktion von Süßwaren über längere Zeiten zeitliche Unterschiede zwischen den einzelnen Nachspeisungen zwischen den einzelnen Produktlinien 16, 17 usw. ergeben.

Fig. 3 verdeutlicht die zeitliche Abfolge der Nachspeisungen in den Produktlinien 16 und 17, aufgetragen über einer Zeitachse t. Die oberste Linie gibt den Füllzustand des Produktbehälters 18 der Produktlinie 16 wieder. Mit der Anforderung einer Nachspeisung und damit zu Beginn einer Entleerung wird das Ventil 28 des Produktbehälters 18 geöffnet, so dass ein Satz Produktmasse 19 von dem Produktbehälter 18 infolge Schwerkrafteinwirkung in den Vorratsbehälter 29 abgelassen wird. Der Vorratsbehälter 29 war bis zu seinem Minimum gefüllt, so dass durch die Überführung gleichzeitig sein Spiegel ansteigt. Die Nachspeisung ist immer so eingerichtet, dass ein Minimum an Vorratsmasse 30 im Vorratsbehälter 29 nicht unterschritten wird. Dies gilt der Sicherung einer gleichmäßigen Produktqualität.

Die Entleerung des Produktbehälters 18 wird durch eine abfallende Linie 39 symbolisiert. Die nachfolgende ansteigende Linie 40 symbolisiert das Befüllen des Produktbehälters 18 der Produktlinie 16, wobei eine entsprechend gesteuerte Teilmenge der Basismasse 15 mit den verschiedenen Zuschlagsstoffen 23 in den Produktbehälter 18 überführt wird. Diese eingeführten Mengen werden gemäß einem waagerechten Teilabschnitt einer Linie 41 gemischt, so dass ein Satz homogener Produktmasse 19 in dem Produktbehälter 18 entsteht. An die Linie 41 schließt sich ein ebenfalls waagerechter Abschnitt in Form der Linie 42 an, in der der Satz Produktmasse 19 in dem Produktbehälter 18 vorrätig gehalten wird und auf die Auslösung einer Nachspeisung wartet. Dieser beschriebene Zyklus wiederholt sich in regelmäßigen Abständen, wobei die Satzgröße der Produktmasse 19 konstant bleibt. Die entsprechende Kurve 43 zeigt den Verlauf des Füllstandes der Vorratsmässe 30 im Vorratsbehälter 29. Es ist hier erkennbar, wie sich Füllabschnitte mit ansteigender Linienführung mit Abarbeitungsabschnitten mit abfallender Linienführung aneinanderanschließen, die im jeweiligen Verhältnis zu der Nachspeisung aus dem Produktbehälter 18 bestehen.

Entsprechendes gilt für die Kurven, die sich auf die Produktlinie 17 beziehen und die im unteren Teil der Fig. 3 dargestellt sind, wobei auch die Zuordnung zur Fig. 2 anhand der Befüllungszustände A, B, C und D erkennbar ist. Man erkennt, dass sich innerhalb des Ablaufs einer normalen Produktion entsprechende zeitliche Verschiebungen der Nachspeisungen in den einzelnen Produktlinien 16, 17 usw. ergeben.

Das Problem, mit dessen Lösung sich die vorliegende Erfindung beschäftigt, tritt am Ende einer Produktion, bei Produktionsunterbrechung oder auch bei Rezepturwechsel, d. h. beim Umschalten auf ein anderes Produkt, ein. Hierbei muss man sich entscheiden, ein Produktendefestzulegen. Ein solches Produktende,welches durch eine Eingabeeinheit der gemeinsamen Steuereinheit 31 eingegeben werden kann, wird dann dazu führen, dass die Vorratsbehälter 29 der einzelnen Produktlinien 16 ,17 usw. so lange noch nachgespeist werden, wie Masse vorhanden ist. Die Behälter werden sich in unterschiedlicher Weise entleeren, wobei das Ende der Produktion in den einzelnen Produktlinien 16,17 usw. zu unterschiedlichen Zeiten eintreten wird. Dies gilt es zu vermeiden und die Anlage so zu steuern, dass bis zu einem gemeinsamen Ende alle Produktlinien noch arbeiten, also das Mischungsverhältnis der verschiedenen Produktsorten bis zu diesem gemeinsamen Endpunkt eingehalten wird, ohne dass nennenswerte Abfallmassen entstehen. Dies wird anhand der nachfolgenden Zeichnungen verdeutlicht.

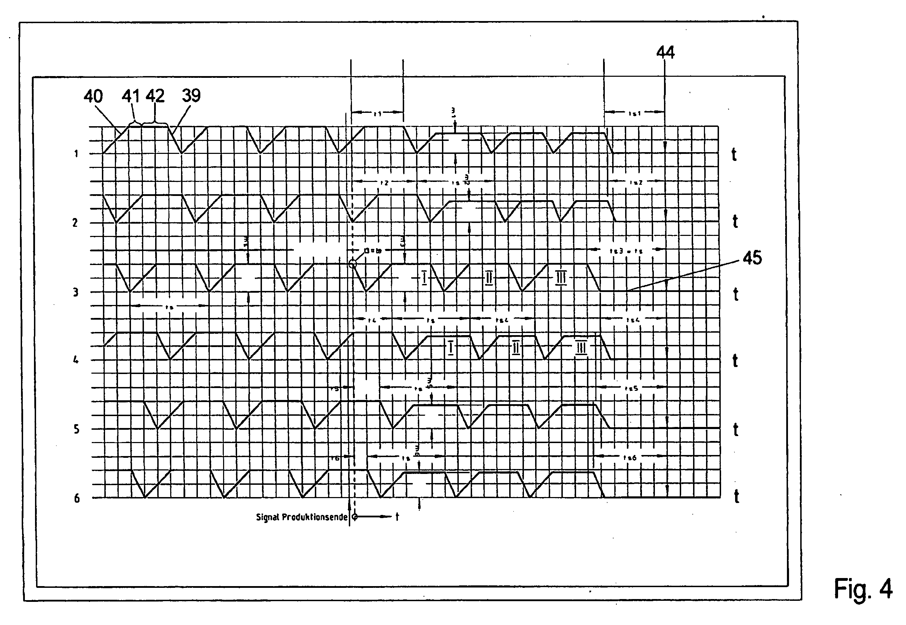

Fig. 4 zeigt in einem Zeitdiagramm den Verlauf der Produktmasse 19 in den Produktbehältern 18. Es sind sechs Kurven übereinander entsprechend sechs Produktlinien einer Anlage dargestellt. Jede Kurve entspricht zumindest anfangs prinzipiell der obersten Kurve der Fig. 3. Alle Kurven sind prinzipiell ähnlich aufgebaut und setzen sich aus sich satzweise wiederholenden geraden Stücken zusammen. So beginnt die oberste Kurve der Produktlinie 1 mit einer Linie 40, die das Befüllen des Produktbehälters 18 mit Basismasse 15 und Zuschlagstoffen 23 symbolisiert. Es schließt sich dann ein waagerechter Abschnitt aus den Linien 41 und 42 an, wobei der Abschnitt 41 einen Mischvorgang dereingewogenen Basismasse 15 mit den eingewogenen Zuschlagsstoffen 23 wiedergibt. Die Linie 42 symbolisiert einen Wartevorgang, der so lange dauert, bis ein Sensor 35 in dem zugehörigen Vorratsbehälter 29 eine Nachspeisung auslöst. Der Produktbehälter 18 entleert sich dann entsprechend der Linie 39. Damit ist ein Satz Produktmasse 19 im Produktbehälter 18 beschrieben. In der Darstellung der Kurve der Produktlinie 1 sind zunächst drei solche Sätze hintereinander dargestellt. Entsprechendes gilt für den Verlauf der Produktmassen 19 in den anderen Produktbehältern 18, also den Produktbehältern 18 der Produktlinien 2, 3, 4, 5 und 6. Der Kurvenverlauf ist jeweils über eine Zeitachse aufgetragen und es ist erkennbar, wie sich die Abfolge der einzelnen Sätze in den Produktionslinien gegeneinander verschoben hat. Die Satzgröße aller Produktmassen ist konstant und entspricht der konstruktiv festgelegten Satzgrößen, die insbesondere durch das Behältervolumen des Produktbehälters 18 festgelegt ist. Auch die Satzeiten in sämtlichen Produktionslinien sind konstant. Der Übergangspunkt zwischen den Linien 42 und 39 symbolisiert das Auftreten des entsprechenden Signals für die Entleerung des betreffenden Produktbehälters 18, was gleichbedeutend mit der Nachspeisung des Vorratsbehälters 29 ist.

Zu einem gewissen Zeitpunkt wird ein Signal gesetzt, mit welchem ein Produktionsende eingeleitet werden soll. Das Signal kann willkürlich in die gemeinsame Steuereinrichtung 31 eingegeben werden oder durch andere Verfahrens- oder Prozessparameter vorgegeben sein, beispielsweise durch eine Entleerung eines vorgeschalteten Behälters.

Nach dem Setzen des Signals für das beabsichtigte Produktionsende wird zunächst festgestellt, welcher Produktbehälter 18 der verschiedenen Produktlinien 1 bis 6 als nächster eine Nachspeisung verlangt und durchführt. Dies ist hier der Behälter 18 der Produktlinie 3. Die Produktlinie 3 wird in diesem Falle die Führungs- oder Master-Produktlinie. Sie wird in dem dargestellten Beispiel noch für drei volle Arbeitszyklen (c = 3) betrieben, und zwar mit konstant gehaltener Satzgröße und Satzzeit. Dies geschieht bis zum definitiven Produktionsende 44. Der waagerechte Kurvenabschnitt 45 vor dem definitiven Produktionsende 44 der Produktlinie 3 symbolisiert die konstruktiv vorgegebene Satzzeit, also die Zeit, die zur Abarbeitung des Vorratsbehälters 29 der Produktlinie 3 bis zur völligen Entleerung erforderlich ist bzw. nachfolgt. Die konstruktiv beibehaltenen Satzgrößen und Satzzeiten in der Produktlinie 3 werden durch die insoweit unverändert dargestellte Höhe unter den Linien 41 und 42 wiedergegeben. Der Zeitpunkt, an dem die erste Nachspeisung der Produktlinie 3 aus dem Produktbehälter 18 in den Vorratsbehälter 29 abgerufen wurde, wird als $t_e = t_3$ in der gemeinsamen Steuereinrichtung 31 gespeichert.

Sodann wird festgestellt, in welcher Produktionslinie nachfolgend an die Produktlinie 3 die nächste Nachspeisung verlangt wird. Dies ist, wie ersichtlich, in der Produktionslinie 6 der Fall und es wird der Zeitpunkt dieser Nachspeisung ermittelt bzw. durch Differenzbildung der Nachspeisungszeitpunkte der Produktlinien 6 und 3 die Zeitdifferenz $t_6$ zwischen diesen beiden Nachspeisungen festgehalten. Aus der oben angegebenen Formel der Möglichkeit der Anpassung durch Satzverkleinerung ergibt sich die Möglichkeit, die verringerte Satzgröße der Produktionslinie 6 und die verringerte Satzzeit zu berechnen. Es versteht sich, dass ein Satz mit verringerter Satzgröße auch in kürzerer Zeit abgearbeitet werden kann. Wie aus Fig. 4 erkennbar, ist für die nachfolgenden Zyklen c = 3 gewählt, d. h. die insgesamt erforderliche Verringerung der Satzgröße wird auf drei Zyklen verteilt, wobei auch die Satzzeit entsprechend verringert wird. Die Aufteilung erfolgt so, dass letztendlich die Vorratsmasse 30 im zugehörigen Vorratsbehälter 29 der Produktlinie 6 das Produktionsende 44 zeitgleich mit dem Produktionsende der Produktionslinie 3 erreicht. Das Produktionsende 44 wird durch zeitgleich auftretende Signale aller Sensoren 35, die alle Nachspeisungen anfordern, erreicht. Die Nachspeisungen werden jedoch nicht mehr ausgeführt Die verringerten Satzgrößen werden durch verringert dargestellte Höhen wiedergegeben.

Entsprechendes gilt für die übrigen Produktlinien, die in zeitlicher Folge eine Nachspeisung in der Produktlinie 5, der Produktlinie 4, der Produktlinie 1 und schließlich in der Produktlinie 2 erfordern. Damit erreichen alle Produktlinien 1, 2, 3, 4, 5, 6 gemeinsam das definitive Produktende 44, ohne dass in den sechs Vorratsbehältern 29 Restvorratsmassen übrig bleiben.

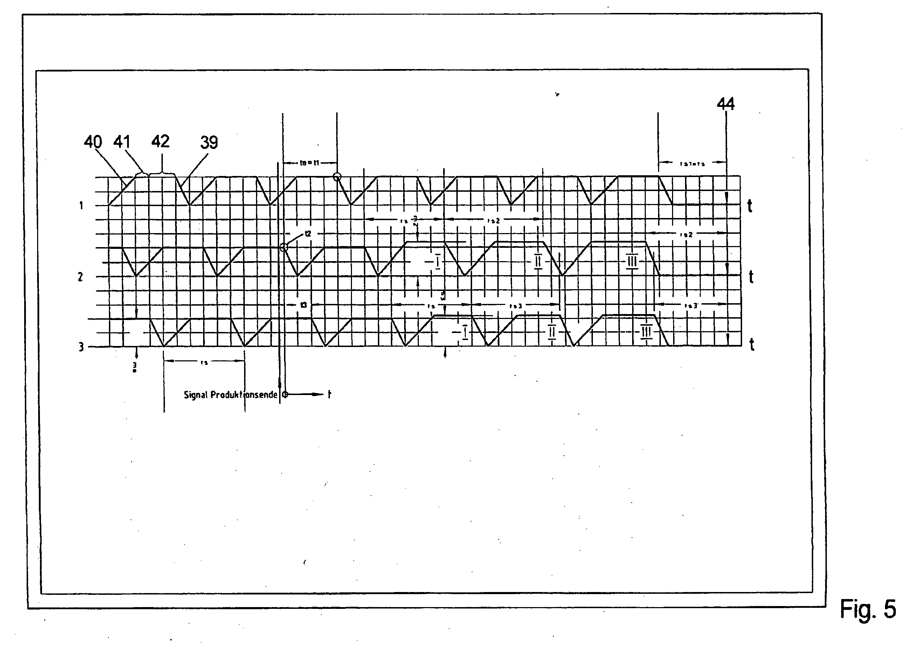

Fig. 5 zeigt die andere Möglichkeit, zu einem gemeinsamen Produktionsende 44 zu gelangen, nämlich unter Anpassung durch Satzvergrößerung. Der Einfachheit halber sind hier nur drei Produktlinien 1, 2, 3 dargestellt. Grundsätzlich kann auf die vorangehende Beschreibung der Fig. 4 hingewiesen werden. Auch gemäß Fig. 5 werden die Zeitpunkte der Nachspeisungen in den einzelnen Produktlinien 1, 2, 3 nach Einleitung eines Signals für ein beabsichtigtes Produktionsende überwacht und aufgenommen. Hier wird jedoch das zuletzt auftretende Nachspeisesignal als Führungs- oder Mastersignal genutzt ($t_l = t_1$). Wie erkennbar, ist es hier die Produktlinie 1, die als letzte nach dem Signal Produktionsende eine Nachspeisung verlangt. Die Differenz zu dem Nachspeisepunkt der Produktionslinie 2 ist bestimmend für die Satzvergrößerung in der Produktlinie 2, die deshalb am größten ist, weil hier der größte zeitliche Abstand zwischen den Nachspeisesignalen auftritt. Die Abläufe in der Produktlinie 3 liegen etwa dazwischen. Auch bei Vergrößerung der Satzgrößen und Satzzeiten in den Produktlinien 2 und 3 wird die Produktlinie 1 als Führungslinie konstant gefahren. Auch hier ist c = 3 gewählt, d. h. das definitive Produktionsende 44 soll nach drei korrigierten Satzgrößen erreicht werden.

Grundsätzlich besteht die Möglichkeit, auch nur eine einzige korrigierte Satzgröße in jeder Produktionslinie einzusetzen (c = 1). Dies hat jedoch den Nachteil, dass hinsichtlich der unterschiedlichen Satzgrößen und Satzzeiten in den einzelnen Produktlinien relativ große Unterschiede entstehen, die zuweilen zur Einhaltung der üblichen Produkteigenschaften nicht förderlich sind. Wenn man den Unterschied zwischen der korrigierten Satzgröße und der konstruktiven Satzgröße möglichst klein halten möchte, wird man c > 1 wählen. Auch die Massen der korrigierten Satzgrößen müssen entsprechend vermischt werden, wobei die konstruktiv vorgegebenen Behältergrößen genutzt werden müssen. Dies ist insbesondere im Hinblick auf eine Satzvergrößerung (Fig. 5) entsprechend zu berücksichtigen.

## BEZUGSZEICHENLISTE

| 1 | Anlage |
| 2 | Wiegebehälter |
| 3 | Rohstoffverwiegung |
| 4 | Pfeil |
| 5 | Leitung |
| 6 | Vorlagebehälter |
| 7 | Leitung |
| 8 | Pumpe |
| 9 | Kocher |
| 10 | Leitung |
| 11 | Vakuumraum |
| 12 | Vakuumbehälter |
| 13 | Leitung |
| 14 | Basisbehälter |
| 15 | Basismasse |
| 16 | Produktlinie |
| 17 | Produktlinie |
| 18 | Produktbehälter |
| 19 | Produktmasse |
| 20 | Leitung |
| 21 | Ventil |
| 22 | Zuschlagsbehälter |
| 23 | Zuschlagsstoff |
| 24 | Leitung |
| 25 | Ventil |
| 26 | Rührwerk |
| 27 | Leitung |
| 28 | Ventil |
| 29 | Vorratsbehälter |
| 30 | Vorratsmasse |
| 31 | Steuereinrichtung |
| 32 | Recheneinheit |
| 33 | elektrische Leitung |
| 34 | elektrische Leitung |
| 35 | Sensor |
| 36 | Wiegezelle |
| 37 | Füllstandsdifferenz |
| 38 | Füllstandsdifferenz |
| 39 | Linie |
| 40 | Linie |
| 41 | Linie |
| 42 | Linie |
| 43 | Kurve |
| 44 | Produktionsende |
| 45 | Kurvenabschnitt |
| 46 | Steuerblock |

## Patentansprüche

1. Verfahren zum Steuern einer Anlage zur gleichzeitigen Herstellung mehrerer Produktsorten von Süßwaren in mehreren Produktlinien, bei dem eine für alle Produktlinien und Produktsorten bestimmte gemeinsame Basismasse in Teilmengen aufgeteilt wird, die einzelnen aufgeteilten Teilmengen jeweils mit den unterschiedlichen Produktsorten der Produktlinien zugeordneten Zuschlagsstoffen satzweise in je einem Produktbehälter vermischt werden, so dass in den Produktlinien satzweise unterschiedliche und mengenmäßig gleiche Produktmassen entstehen, die als Vorratsmassen in den Produktlinien parallel weiterverarbeitet werden, wobei der Verbrauch der Mengen der Vorratsmassen während der Weiterverarbeitung überwacht wird und in Abhängigkeit davon die Vorratsmassen der Produktlinien satzweisen mit je einer mengenmäßig gleichen Produktmasse zeitversetzt nachgespeist werden, **dadurch gekennzeichnet, dass** nachfolgend an ein eingeleitetes Produktionsende und/oder einen Produktwechsel die nachfolgenden Satzgrößen und Satzzeiten der anderen Produktmassen relativ zu einer konstanten Produktmasse mit konstanter Satzzeit so verändert werden, dass sich zu einem nachfolgenden Zeitpunkt die Mengen an Vorratsmassen in allen Produktlinien gleichzeitig erschöpfen, wobei die Veränderung durch Satzverkleinerung oder Satzvergrößerung der Restsätze in den anderen Produktlinien relativ zu der einen Produktlinie geschieht.

2. Verfahren nach Anspruch 1, **dadurch gekennzeichnet, dass** die Zeitdifferenzen zwischen den satzweisen Nachspeisungen der Vorratsmassen in den einzelnen Produktlinien mit der jeweiligen unterschiedlichen und mengenmäßig gleichen Produktmasse festgestellt und in Abhängigkeit davon die Satzgrößen und Satzzeiten nachfolgender Produktmassen der Produktlinien so verändert werden, dass die Zeitdifferenzen der Nachspeisungen zu einem für alle Produktlinien gemeinsamen in der Zukunft liegenden Zeitpunkt verschwinden.

3. Verfahren nach einem der Ansprüche 1 oder 2, **dadurch gekennzeichnet, dass** die Änderung der Satzgröße der anderen Produktmassen jeweils auf mehrere nacheinander folgende Zyklen mit untereinander gleich großen Satzgrößen in jeder Produktlinie aufgeteilt wird.

4. Verfahren nach einem der Ansprüche 1 bis 3, **dadurch gekennzeichnet, dass** die erste Produktmasse mit konstanter Satzgröße weitererzeugt wird, und dass die anderen Produktmassen mit verringerten Satzgrößen angemischt werden, wobei die verringerte Satzgröße jeder Produktmasse proportional zu der Zeitdifferenz zwischen der Nachspeisung der betreffenden Vorratsmasse mit der betreffenden Produktmasse zu der Nachspeisung der Vorratsmasse der ersten Produktmasse gewählt wird.

5. Verfahren nach einem der Ansprüche 1 bis 4, **dadurch gekennzeichnet, dass** die Verringerung der Satzgrößen der anderen Produktmassen nach der Formel

$$mn = ms - (tn/(ts*c))*ms$$

erfolgt, wobei

ms (kg) = die konstruktiv festgelegte Satzgröße aller Produktmassen,
mn (kg) = die verringerten Satzgrößen der Produktionslinien,
n = die Produktionslinien (n = 1, 2, 3, 4 usw.),
tn = die Zeitdifferenz der Nachspeisungen der Produktmassen,
te = 0 = der Zeitpunkt der Nachspeisung der ersten Produktmasse,
ts (min) = die Satzzeit der konstruktiv festgelegten Satzgröße,
c = Anzahl der Abfahr-Zyklen bis Produktionsende

ist.

6. Verfahren nach einem der Ansprüche 1 bis 3, **dadurch gekennzeichnet, dass** die letzte Produktmasse mit konstanter Satzgröße weitererzeugt wird, und dass die anderen Produktmassen mit vergrößerten Satzgrößen angemischt werden, wobei die vergrößerte Satzgröße jeder Produktmasse proportional zu der Zeitdifferenz zwischen der Nachspeisung der betreffenden Vorratsmasse mit der betreffenden Produktmasse zu der Nachspeisung der Vorratsmasse der letzten Produktmasse gewählt wird.

7. Verfahren nach Anspruch 6, **dadurch gekennzeichnet, dass** die Vergrößerung der Satzgrößen der anderen Produktmassen nach der Formel

$$mn = ms + ((tl-tn)/(ts*c))*ms$$

erfolgt, wobei

ms (kg) = die konstruktiv festgelegte Satzgröße aller Produktmassen,
mn (kg) = die vergrößerten Satzgrößen der Produktionslinien,
n = die Produktionslinien (n = 1, 2, 3, 4 usw.),
tn = die Zeitdifferenz der Nachspeisungen der Produktmassen,
tl = die Zeitdifferenz der Nachspeisungen zwischen der letzten und der ersten Produktmasse,
ts (min) = die Satzzeit der konstruktiv festgelegten Satzgröße,
c = Anzahl der Abfahr-Zyklen bis Produktionsende

ist.

8. Vorrichtung zum Steuern einer Anlage zur gleichzeitigen Herstellung mehrerer Produktsorten von Süßwaren in mehreren Produktlinien, mit einem Basisbehälter für eine allen Produktmassen und Produktlinien gemeinsame Basismasse, den unterschiedlichen Produktsorten zugeordneten Produktbehältern für die satzweise Erstellung von Produktmassen in den einzelnen Produktlinien, Zuschlagsbehältern für Zuschlagsstoffe für jede Produktmasse jeder Produktlinie, je einem Vorratsbehälter für eine Vorratsmasse in jeder Produktlinie, aus dem heraus die Weiterverarbeitung der betreffenden Vorratsmasse zu der Produktsorte der betreffenden Produktlinie erfolgt, und die Behälter verbindenden Leitungen, in denen entsprechende Ventile vorgesehen sind, insbesondere zur Durchführung des Verfahrens nach einem der Ansprüche 1 bis 4, **dadurch gekennzeichnet, dass** eine gemeinsame Steuereinrichtung (31) für die den Behältern (14, 22, 18, 29) zugeordneten Ventile (21, 25, 28) und Wiegezellen (36) vorgesehen ist, jeder Vorratsbehälter (29) in jeder Produktlinie (16, 17 usw.) einen Sensor (35) zur Abgabe eines der Veränderung der Menge jeder Vorratsmasse (30) proportionalen Signals an die gemeinsame Steuereinrichtung (31) aufweist, und die Steuereinrichtung (31) eine Recheneinheit (32) zur Aufnahme der Signale der Sensoren (35), zur Berechnung veränderter Satzgrößen und Satzzeiten der anderen Produktmassen in den anderen Produktlinien relativ zu einer ersten Produktmasse in einer ersten Produktlinie und zur Ansteuerung der Ventile (21, 25, 28) und Wiegezellen (36) des Basisbehälters (14), der Produktbehälter (18) und der Zuschlagsbehälter (22) aufweist, wobei nachfolgend an ein eingeleitetes Produktionsende und/oder einen Produktwechsel die nachfolgenden Satzgrößen und Satzzeiten der anderen Produktmassen in den anderen Produktlinien relativ zu der ersten Produktmasse in der ersten Produktlinie mit konstanter Satzzeit so verändert werden, dass sich zu einem nachfolgenden Zeitpunkt die Mengen an Vorratsmassen in allen Produktlinien gleichzeitig erschöpfen, wobei die Veränderung durch Satzverkleinerung oder Satzvergrößerung der Restsätze in den anderen Produktlinien relativ zu der ersten Produktlinie geschieht.

**9.** Vorrichtung nach Anspruch 8, **dadurch gekennzeichnet, dass** der Produktbehälter (18) und die Zuschlagsbehälter (22) jeder Produktlinie (16, 17 usw.) Wiegezellen (36) für die Bemessung einer Anmischung eines Satzes Produktmasse aufweisen, die an die gemeinsame Steuereinrichtung (31) angeschlossen sind.

**10.** Vorrichtung nach Anspruch 9, **dadurch gekennzeichnet, dass** die gemeinsame Steuereinrichtung (31) den einzelnen Produktlinien (16, 17 usw.) zugeordnete Steuerblöcke (46) umfasst.

**Claims**

**1.** A method of controlling a system for simultaneously producing a plurality of different product kinds of confectioneries in a plurality of product lines, the method comprising the steps of
dividing a base mass into a plurality of partial masses, the base mass being a common mass for all product kinds and all product lines,
mixing the partial masses each in a product container in a batch with different aggregates to produce a plurality of batches of different product masses having identical batch size, the aggregates varying depending on the respective product kind,
further processing the product masses as reservoir masses,
observing the consumption of the reservoir masses during further processing,
refilling at different points in time the reservoir masses of the product lines with a batch of a respective product mass having identical batch size in response to the result of the observation of the consumption of the reservoir masses, **characterized in that** following to a production ending signal and/or a change of products, the following batch sizes and batch times of the other product masses are changed with respect to a constant product mass having a constant batch time in a way that the reservoir masses of all product lines are exhausted at a later common point in time, the change being realized by a batch reduction or a batch increase of the remaining batches in the other product lines with respect to the one product line.

**2.** The method of claim 1, **characterized in that** the time differences between the refilling of batches of the reservoir masses in the several product lines with different product mass having identical batch size are determined and the batch sizes and batch times of following product masses of the product lines are changed in response to this such that the time differences between the refilling simultaneously disappear for all product lines at a common time in the future.

**3.** The method of claim 1 or 2, **characterized in that** the change of the batch sizes of the other product masses is conducted for a plurality of times in the following cycles after the step of changing, the step of changing being realized for each of the remaining product lines in a way that the respective product mass has a plurality of identical second batch sizes.

**4.** The method of one of the claims 1 to 3, **characterized in that** the first product mass is conducted further with a constant batch size and the second batch sizes of the other product masses are changed to be smaller than the first batch sizes of the other product masses, the reduced second batch size of each other product mass being proportional to the time difference between the point in time of refilling with the respective remaining product mass and refilling with the first product mass.

**5.** The method of one of the claims 1 to 4, **characterized in that** the second batch sizes of the other product masses are changed according to the following equation

$$mn = ms - (tn/(ts·c))·ms$$

wherein the following applies:

ms [kg] = predetermined first batch size of all product masses,
mn [kg] = reduced second batch size of the remaining product masses,
n = product lines (n = 1, 2, 3, 4 and so forth),
tn = time difference between refilling with the product masses,
te = 0 = point in time of refilling with the first product mass,
ts [min] = predetermined batch time all product masses,
c = number of cycles until the production ending.

**6.** The method of one of the claims 1 to 3, **characterized in that** the last product mass is conducted further with a constant batch size and the second batch sizes of the remaining product masses are changed to be greater, the increased second batch size of each product mass being proportional to the time difference between the point in time of refilling with the respective remaining product mass and refilling with a last product mass.

**7.** The method of claim 6, **characterized in that** the second batch sizes of the remaining product masses are changed according to the following equation

$$mn = ms + ((tl-tn)/(ts \cdot c)) \cdot ms$$

wherein the following applies:

ms [kg] = predetermined first batch size of all product masses,
mn [kg] = increased second batch size of the remaining product masses,
n = the product lines (n = 1, 2, 3, 4 and so forth),
tn = time difference between refilling with the product masses,
tl = time difference between refilling with the last product mass and the first product mass,
ts [min] = predetermined batch time all product masses,
c = number of cycles until the production ending.

8. An apparatus for simultaneously producing a plurality of different product kinds of confectioneries in a plurality of product lines, comprising
a base container, the base container being designed and arranged to contain a common base mass for all product masses and product lines,
a plurality of product containers, each of the product containers being associated with one of the product kinds, the product containers being designed and arranged to produce batches of different product masses in the product lines,
a plurality of aggregate containers, each of the aggregate containers being designed and arranged to contain aggregates associated with one of the product lines,
a plurality of reservoir containers, each of the reservoir containers being designed and arranged to contain a reservoir mass associated with one of the product lines, each of the reservoir containers being designed and arranged to allow for further processing of the respective reservoir mass into the product kind of the respective product line,
conduits connecting the containers and valves being arranged in the conduits, especially of one of the claims 1 to 4, **characterized in that**
a common control unit (31) is provided to control the valves (21, 25, 28) and the weighing cells (36) associated to the reservoirs (14, 22, 18, 29),
each of the reservoir containers (29) of each product line (16, 17, etc.) including a sensor (35), the sensor being designed and arranged to sense a change of the amount of reservoir mass (30) contained in the reservoir container and to produce a signal which is proportional to the change of the amount of reservoir mass contained in the reservoir container, and
the common control unit (31) includes a processor (32) being designed and arranged to receive the signals of the sensors (35) and to determine and control modified batch sizes and batch times of the other product masses of the other product lines with respect to a first product mass in a first product line and to control the valves (21, 25, 28) and weighing cells (36) of the base container (14), the product containers (18) and the aggregate containers (22), wherein following to a production ending signal and/or a change of products, the following batch sizes and batch times of the other product masses in the other product lines are changed with respect to the first product mass in the first product line having a constant batch time in a way that the reservoir masses of all product lines are exhausted at a later common point in time, the change being realized by a batch reduction or a batch increase of the remaining batches in the other product lines with respect to the first product line.

9. The apparatus of claim 8, **characterized in that** the weighing cells (36) of the product containers (18) and the aggregate containers (22) of each product line (16, 17, etc.) are designed and arranged to determine the mixture of a batch of product mass, the weighing cells being connected to the common control unit (31).

10. The apparatus of claim 9, **characterized in that** the common control unit (31) includes a plurality of control blocks (46) each being associated with one the product lines (16, 17, etc.).

## Revendications

1. Procédé de commande d'une installation pour la fabrication simultanée de plusieurs sortes de sucreries sur plusieurs lignes de production, dans lequel
une masse de base commune déterminée pour toutes les lignes de production et toutes les sortes de produits est divisée en quantités partielles,
les différentes quantités partielles étant mélangées chacune par lot avec les additifs correspondants différentes sortes de produits des lignes de production, chacune dans un réservoir de produit, de façon à obtenir, sur les lignes de production, par lots, des masses de produits différentes et de mêmes quantités, qui sont traitées en parallèle comme des masses de réserve sur les lignes de production,
la consommation des quantités des masses de réserve pendant le traitement est surveillée et les masses de réserve des lignes de production peuvent être réapprovisionnées par lots avec une masse de produit de même quantité, de manière décalée dans le temps, **caractérisé en ce que**
suite à une fin de production initiée et/ou un changement de produit, les tailles des lots suivants et les temps des lots des autres masses de produits sont modifiées par rapport à une masse de produit constante avec un temps de lot constant sont modifiées de façon à ce que, à un moment suivant, les quantités de masses de réserve s'épuisent en même temps sur toutes les lignes de production, la modification ayant lieu par augmentation ou réduction des lots restants sur les autres lignes de production par rapport à une ligne de production.

2. Procédé selon la revendication 1, **caractérisé en ce que** les différences de temps entre les réapprovisionnements par lots des masses de réserve sur les différentes lignes de production avec la même masse de produit différente et de même quantité sont mesurées et les tailles et les temps des lots des masses de produits suivantes sont modifiées en conséquence de façon à ce que les différences de temps des réapprovisionnements disparaissent à un moment commun se trouvant dans l'avenir pour toutes les lignes de production.

3. Procédé selon l'une des revendications 1 ou 2, **caractérisé en ce que** la modification de la taille des lots des autres masses de produits est répartie sur plusieurs cycles successifs avec des tailles de lots égales sur chaque ligne de production.

4. Procédé selon l'une des revendications 1 à 3, **caractérisé en ce que** la première masse de produit continue d'être produite avec une taille de lot constante et **en ce que** les autres masses de produits avec des tailles de lots réduites sont ajoutées, la taille de lot réduite de chaque masse de produit étant proportionnelle à la différence de temps entre le réapprovisionnement de la masse de réserve concernée avec la masse de produit concernée par rapport au réapprovisionnement de la masse de réserve de la première masse de produit.

5. Procédé selon l'une des revendications 1 à 4, **caractérisé en ce que** la réduction des tailles de lots des autres masses de produits a lieu selon la formule :

$$mn = ms - (tn/(ts*c))*ms$$

ms (kg) = la taille de lot de toutes les masses de produits, déterminée de manière constructive,
mn (kg) = les tailles de lots réduites des lignes de production,
n = les lignes de production (n = 1, 2, 3, 4 etc.),
tn = la différence de temps entre les réapprovisionnements des masses de produits,
te = 0 = le moment du réapprovisionnement de la première masse de produit,
ts (min) = le temps de lot de la taille de lot déterminée de manière constructive,

c = nombre de cycles de démarrage jusqu'à la fin de la production.

6. Procédé selon l'une des revendications 1 à 3, **caractérisé en ce que** la dernière masse de produit continue d'être générée avec une taille de lot constante et **en ce que** les autres masses de produits sont ajoutées avec des tailles de lots augmentées, la taille de lots augmentée de chaque masse de produit étant proportionnelle à la différence de temps entre le réapprovisionnement de la masse de réserve concernée avec la masse de produit concernée par rapport au réapprovisionnement de la masse de réserve de la dernière masse de produit.

7. Procédé selon la revendication 6, **caractérisé en ce que** l'augmentation des tailles de lots des autres masses de produits a lieu selon la formule :

$$mn = ms + ((tl-tn)/(ts*c))*ms$$

ms (kg) = la taille de lot de toutes les masses de produits, déterminée de manière constructive,
mn (kg) = les tailles de lots réduites des lignes de production,
n = les lignes de production (n = 1, 2, 3, 4 etc.),
tn = la différence de temps entre les réapprovisionnements des masses de produits,
tl = la différence de temps des réapprovisionnements entre la dernière et la première masse de produit,
te = 0 = le moment du réapprovisionnement de la première masse de produit,
ts (min) = le temps de lot de la taille de lot déterminée de manière constructive,
c = nombre de cycles de démarrage jusqu'à la fin de la production.

8. Dispositif de commande d'une installation pour la fabrication simultanée de plusieurs sortes de sucreries sur plusieurs lignes de production, avec
un réservoir de base pour une masse de base commune à toutes les masses de produits et lignes de production,
les réservoirs de produits correspondants aux différentes sortes de produits pour le réglage par lots de masses de produits sur les différentes lignes de production,
un réservoir pour une masse de réserve sur chaque ligne de production, à partir duquel a lieu le traitement de la masse de réserve concernée afin d'obtenir la sorte de produit de la ligne de production concernée, et
les conduites reliant les réservoirs, dans lesquelles sont prévues des soupapes correspondantes, plus particulièrement pour la mise en oeuvre du procédé selon l'une des revendications 1 à 4, **caractérisé en ce que**

un dispositif de commande (31) commun est prévu pour les soupapes (21, 25, 28) et cellules de pesée (36) correspondant aux réservoirs (14, 22, 18, 29), chaque réservoir (29) de chaque ligne de production (16, 17, etc.) comprend un capteur (35) pour l'envoi d'un signal proportionnel à la modification de la quantité de chaque masse de réserve (30) au dispositif de commande (31) commun, et

le dispositif de commande (31) comprend une unité de calcul (32) pour l'enregistrement des signaux des capteurs (35), pour le calcul des tailles de lots modifiées des autres masses de produits sur les autres lignes de production par rapport à une première masse de produit sur une première ligne de production et pour la commande des soupapes (21, 25, 28) et des cellules de pesée (36) du réservoir de base (14), les réservoirs de produits (18) et des réservoirs d'additifs (22), les tailles de lots et les temps de lots suivants des autres masses de produits étant modifiées, à la suite d'une fin de production et/ou d'un changement de produit, sur les autres lignes de production par rapport à la première masse de produit sur la première ligne de production avec un temps de lot constant, de façon à ce que, à un moment suivant, les quantités de masses de réserve s'épuisent en même temps sur toutes les lignes de production, la modification ayant lieu par diminution ou augmentation des lots restants sur les autres lignes de production par rapport à la première ligne de production.

9. Dispositif selon la revendication 8, **caractérisé en ce que** le réservoir de produit (18) et les réservoirs d'additifs (22) de chaque ligne de production (16, 17, etc.) comprennent des cellules de pesée (36) pour la détermination d'un ajout d'un lot de masse de produit, qui sont connectées au dispositif de commande (31) commun.

10. Dispositif selon la revendication 9, **caractérisé en ce que** le dispositif de commande (31) commun comprend des blocs de commande (46) correspondant aux différentes lignes de production (16, 17, etc.).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9965321 A
- EP 0648427 A
- WO 2004103085 A
- US 5481968 A